# DEMANDE DE BREVET EUROPEEN

(11) **EP 0 591 079 A1**
(43) Date de publication de la demande: **06.04.1994**
(21) Numéro de dépôt: 93460026.3
(22) Date de dépôt: 13.09.1993
(51) Int. Cl.: A23L 1/212, A23L 1/052, A23L 1/27, A23G 3/00

(54) **Procédé de réalisation d'un effet de peau sur des fruits ou légumes reconstitués**

(30) Priorité: 02.10.1992 FR 9212108
(71) Demandeur: SOREAL SOCIETE ANONYME, F-56220 Pluherlin (FR)
(72) Inventeur: Bocabeille, Gilles, F-56000 Vannes (FR); Gaudet, Patrice, F-56000 Vannes (FR)
(74) Mandataire: Fournier, Michel Robert Marie

(57) **Abrégé**

L'invention concerne des fruits ou légumes reconstitués sous forme de gel à partir du mélange d'un sol d'alginate ou de pectine, d'ions calcium, et de pulpe du produit naturel.

Elle consiste à réaliser sur ces produits reconstitués un effet de peau en appliquant un colorant alimentaire sur la surface du gel où cet effet de peau est désiré.

Si l'état de surface naturel du gel est différent de l'état de surface de la peau du produit naturel à imiter, il est prévu une phase préalable d'obtention de celui-ci par gélification dudit mélange sur un support présentant un état de surface correspondant.

## Description

La présente invention concerne des produits alimentaires, fruits ou légumes, reconstitués sous la forme d'un gel.

Il est bien connu de fabriquer ces produits, en mettant en oeuvre une technique de retexturation basée sur les propriétés gélifiantes des alginate et pectine en présence d'un sel de calcium.

Le brevet FR-A-2 114 706 au nom d'Unilever NV divulgue notamment un procédé selon lequel on gélifie au moyen d'ions calcium un sol d'alginate ou de méthoxypectate inférieur en mélange avec une substance dérivée du produit naturel telle que la pulpe. Les différents composants sont d'abord mélangés, avec un agent complexant du calcium qui permet de retarder la gélification jusqu'au moment où le mélange est transféré dans des moules. Les moules sont de forme choisie en fonction de la destination des produits : rectangulaires pour obtenir des plaques, étroits et allongés pour obtenir des bâtonnets qui seront débités en tranches ou en quartiers, etc.

Longtemps, ces produits n'ont été utilisés que de façon limitée, incorporés dans des desserts ou produits laitiers tels que yoghourts. Mais depuis quelques années, leur domaine d'utilisation s'est nettement étendu, avec le développement des préparations culinaires prêtes à cuire comme les brochettes et les plats cuisinés.

Dans ces nouveaux produits, la présentation a son importance au même titre que les qualités organoleptiques. Or, si du point de vue de ces dernières, on peut considérer que les fruits ou légumes reconstitués actuels sont parfaitement au point, leur aspect extérieur, couleur exceptée, est généralement assez éloigné de celui du produit naturel, en ce que la peau n'est pas reproduite. Ceci est particulièrement vrai pour des légumes tels que poivrons, tomates ou champignons.

Malgré que ce problème ne soit plus récent, et que devant la demande grandissante, il ait mobilisé nombre de chercheurs de l'agro-alimentaire, aucune solution satisfaisante n'est apparue à ce jour.

Une indication est donnée dans le brevet FR-A-2 114 706 déjà mentionné, s'agissant de reproduire la peau de cerise. Le mélange des composants de départ du produit - soit le sol d'alginate, les ions calcium et la substance tirée du fruit - après qu'il ait commencé à se gélifier, est introduit dans un bain contenant des ions calcium. Ceux-ci forment rapidement une peau gélifiée, tandis que la gélification à l'intérieur est assurée par les seuls ions calcium incorporés au départ.

On obtient ainsi un pelliculage du produit par durcissement de la paroi extérieure du gel qui, peut-être, fait illusion dans ce cas particulier, mais n'est pas généralisable car n'introduisant pas de variation de coloration. En effet, le plus souvent, l'aspect de la peau se traduit visuellement par une variation progressive de densité de la couleur à l'approche de la surface externe, suivie d'une variation brutale sur l'épaisseur de la peau proprement dite, et par un état de surface qui peut être lisse ou granuleux.

La présente invention consiste précisément en un procédé simple permettant de reproduire ces trois composantes et de les adapter facilement en fonction de chaque cas particulier.

Ce procédé de réalisation d'un effet de peau sur un produit, fruit ou légume, reconstitué sous forme de gel à partir du mélange d'un sol d'alginate ou de pectine, d'ions calcium et d'une substance tirée du fruit ou légume naturel, est caractérisé en ce qu'il comprend la phase d'appliquer un colorant alimentaire, après gélification dudit mélange, sur la surface du gel où cet effet de peau est désiré ;
et comprend en outre, si l'état de surface naturel du gel est différent de l'état de surface de la peau du produit naturel à imiter, la phase préalable d'obtenir celui-ci par gélification dudit mélange sur un support présentant un état de surface correspondant.

Certaines applications nécessiteront de reproduire l'effet de peau sur les surfaces inférieure et supérieure, ou sur la totalité de l'enveloppe du gel, qui sera alors formé dans des moules.

Le colorant utilisé peut être hydrosoluble, pour des produits à base de fruits ou légumes à forte teneur en eau tels que poivrons, tomates, agrumes, ou liposoluble, pour des produits gras, à base de fruits secs ou arachides par exemple.

Il peut d'autre part être appliqué très concentré, ou dilué : très concentré et pendant un temps très court pour obtenir un effet de peau fine et de couleur intense ; dilué et pendant plus longtemps pour obtenir un effet de peau pastel et plus épaisse. Pour son application, on procédera par trempage, ou pulvérisation, ou par contact (par exemple impression par rouleau ou par feutre).

De par la nature du gel et le choix du colorant, mais de façon inattendue, il se produit après application de celui-ci une légère migration de pigments vers l'intérieur, qui s'atténue très rapidement. Le phénomène procure l'effet souhaité d'une variation progressive de la densité de couleur entre la surface et l'intérieur du gel, et est éventuellement contrôlable par adjonction dans le colorant ou dans le mélange à partir duquel est obtenu le gel d'un agent complexant, lequel est par exemple un hydrolysat de protéine (collagène).

Selon le mode d'application du colorant utilisé et sa nature, le procédé selon l'invention peut comporter en outre une phase d'élimination de l'excédent de colorant appliqué sur le gel, par tamponnage ou séchage, ou par râclage avec éventuellement récupération et recyclage de l'excédent.

Une fois cette opération effectuée, encore faut-il, de préférence assurer la stabilisation du colorant afin d'éviter qu'il ne migre vers l'extérieur en présence d'humidité, ou vers des produits voisins. On peut recourir pour cette stabilisation à différents moyens, dont l'agent complexant déjà mentionné précédemment à propos du contrôle de la migration du colorant vers l'intérieur du produit. On peut également, ou en outre, prévoir l'apposition en surface du gel d'un film à base de protéine (gélatine), ou de glucide (carraghénate ou alginate), ou de lipide (graisse ou huile), ou d'une combinaison de ceux-ci, la composition étant notamment fonction du colorant utilisé. Le mélange pour la réalisation du film est préparé indépendamment du gel, puis il est nappé de façon classique sur celui-ci.

Différentes configurations pour le produit final sont possibles, fonction des applications. Pour des produits reproduisant des légumes et destinés à être débités en morceaux, on adoptera généralement un conditionnement en plaques ou blocs rectangulaires, éventuellement superposées avec intercalaires en papier sulfurisé ou étanchéifié. Il conviendra de découper, avant ce conditionnement, le pourtour des plaques ou blocs de gel, pour éliminer les éventuels effets de bavure résultant de l'application du colorant.

Plusieurs exemples de mise en oeuvre du procédé selon l'invention vont maintenant être décrits en détail.

### EXEMPLE 1

### Poivron vert en plaque

On prépare un mélange A et un mélange B avec les composants suivants, dont les pourcentages sont indiqués par rapport au poids de produit final :

| Mélange A | |
|---|---|
| pulpe de poivron vert | 40 % |
| amidon | 1 % |
| sulfate de calcium | 1 % |
| eau | 8 % |
| arôme + colorant | |

| Mélange B | |
|---|---|
| alginate de sodium | 1 % |
| pyrophosphate de sodium | 0,2 % |
| hydrolysat de protéine | 0,5 % |
| eau | 48,3 % |

On effectue ensuite un mélange rapide de A et de B, que l'on coule en continu sur la sole lisse d'un convoyeur, dans des conditions exemptes de cisaillement pour permettre la formation du gel.

La coloration de la surface inférieure de la bande de gel est réalisée par trempage en bout du convoyeur dans un bac, alimenté en continu avec une solution de chlorophylle alimentaire.

En sortie de bac, l'excès de colorant est éliminé par râclage, et la bande de gel est retournée sur un autre convoyeur.

Elle y subit un pelliculage par chute en rideau d'une solution de gélatine dont le point de fusion a été relevé par addition de carraghénates.

Enfin, la bande est refroidie dans un courant d'air froid, puis découpée en plaques, lesquelles sont empilées avec intercalaires de papier.

### EXEMPLE 2

### Tomate en plaque

Comme précédemment, on prépare des mélanges A et B avec les composants suivants :

| Mélange A | |
|---|---|
| concentré de tomate | 20 % |
| amidon | 1 % |
| acide citrique | 0,3 % |
| eau | 28,7 % |
| arôme + colorant | |

| Mélange B | |
|---|---|
| alginate de sodium | 1 % |
| phosphate dicalcique | 0,2 % |
| hydrolysat de protéine | 0,5 % |
| eau | 48,3 % |

A et B sont rapidement mélangés et coulés sur la sole lisse d'un convoyeur.

La surface inférieure de la bande de gel est colorée en continu par trempage dans un bac en bout de convoyeur, alimenté en continu avec une solution de carmin cochenille alimentaire.

Les opérations suivantes sont les mêmes que dans l'exemple 1, sauf que pour le pelliculage, l'imperméabilité de la gélatine a été augmentée par addition d'huile à bas point de fusion, pour éviter son ternissement.

### EXEMPLE 3

### Orange en plaque

Les mélanges A et B sont préparés comme suit :

| Mélange A | |
|---|---|
| pulpe d'orange | 20 % |
| amidon | 1 % |
| acide citrique | 0,4 % |
| eau | 28,6 % |
| arôme + colorant | |

| Mélange B | |
|---|---|
| alginate de sodium | 1 % |
| phosphate dicalcique | 0,2 % |
| hydrolysat de protéine | 0,5 % |
| citrate trisodique | 0,2 % |
| eau | 48,1 % |

A et B sont mélangés rapidement et coulés sur la sole d'un convoyeur.

Ici, la coloration est pratiquée sur la surface supérieure de la bande de gel, par pulvérisation en continu d'une solution d'annato-carmin alimentaire.

Les phases suivantes (râclage, pelliculage, découpage et conditionnement) sont les mêmes que dans l'exemple 2.

## Revendications

**1)** Procédé de réalisation d'un effet de peau sur un produit, fruit ou légume, reconstitué sous forme de gel à partir du mélange d'un sol d'alginate ou de pectine, d'ions calcium et d'une substance tirée du fruit ou légume naturel, caractérisé en ce qu'il comprend la phase d'appliquer un colorant alimentaire, après gélification dudit mélange, sur la surface du gel où cet effet de peau est désiré ;
et comprend en outre, si l'état de surface naturel du gel est différent de l'état de surface de la peau du produit naturel à imiter, la phase préalable d'obtenir celui-ci par gélification dudit mélange sur un support présentant un état de surface correspondant.

**2)** Procédé selon la revendication 1, caractérisé en ce qu'on utilise un colorant hydrosoluble.

**3)** Procédé selon la revendication 1, caractérisé en ce qu'on utilise un colorant liposoluble.

**4)** Procédé selon l'une des revendications 1 à 3, caractérisé en ce que l'on applique le colorant par trempage.

**5)** Procédé selon l'une des revendications 1 à 3, caractérisé en ce que l'on applique le colorant par pulvérisation.

**6)** Procédé selon l'une des revendications 1 à 3, caractérisé en ce que l'on applique le colorant par impression.

**7)** Procédé selon l'une des revendications 1 à 6, caractérisé en ce que l'on adjoint au colorant, ou audit mélange de préparation du gel, un agent complexant pour le stabiliser et limiter sa migration vers l'intérieur du produit.

**8)** Procédé selon l'une des revendications 1 à 7, caractérisé en ce qu'il comprend en outre la phase d'éliminer l'excédent de colorant appliqué sur le gel.

**9)** Procédé selon l'une des revendications 1 à 8, caractérisé en ce qu'il comprend en outre la phase de stabiliser le colorant par apposition en surface du gel d'un film à base de protéine, ou de glucide, ou de lipide, ou d'une combinaison de ceux-ci.

**10)** Procédé selon l'une des revendications 1 à 8, caractérisé en ce que le produit étant conformé en plaques ou blocs, le pourtour est découpé pour éliminer les effets de bavure.
